# EUROPEAN PATENT APPLICATION

(11) **EP 4 411 885 A1**
(43) Date of publication of application: **07.08.2024**
(21) Application number: 23179100.5
(22) Date of filing: 14.06.2023
(51) Int. Cl.: H01M 4/38, H01M 4/46, H01M 4/66, H01M 4/04, H01M 4/02

(54) **NEGATIVE ELECTRODE STRUCTURE APPLIED TO ALUMINUM BATTERY**

(30) Priority: 31.01.2023 TW 112103273
(71) Applicant: APh ePower Co., Ltd., Kaohsiung City 821 (TW)
(72) Inventor: WU, Jui-Hsuan, 821 Kaohsiung City (TW); TSAI, Shih Po Ta, 821 Kaohsiung City (TW); YANG, Chun-Chieh, 821 Kaohsiung City (TW); CHEN, Wei-An, 821 Kaohsiung City (TW)
(74) Representative: Becker, Eberhard

(57) **Abstract**

A negative electrode structure (100) applied to an aluminum battery (101), including a first metal layer (110) and a second metal layer (120), is provided. The first metal layer (110) has a first reduction ability. The second metal layer (120) has a second reduction ability. The second metal layer (120) is disposed on the first metal layer (110), and the first reduction ability is higher than the second reduction ability, such that the second metal layer (120) is corroded and dissolved in the aluminum battery (101).

## Description

### BACKGROUND

### Technical Field

The disclosure relates to a negative electrode structure, and in particular to a negative electrode structure applied to an aluminum battery.

### Description of Related Art

The aluminum battery is an electrochemical energy storage element with a metal foil as the negative electrode and has advantages such as preferable safety and low cost. Furthermore, the negative electrode of the aluminum battery electrochemically reacts with the electrolyte (for example, chloroaluminate ionic liquid) during the charging and discharging process, so that metal deposition, metal dissolution, etc. are produced on the negative electrode. The discharge capacity mechanism depends on the rate of the metal dissolution reaction.

### SUMMARY

The disclosure provides a negative electrode structure applied to an aluminum battery, which can effectively increase the rate of a metal dissolution reaction, thereby increasing the energy density of the aluminum battery.

A negative electrode structure applied to an aluminum battery of the disclosure includes a first metal layer and a second metal layer. The first metal layer has first reduction ability. The second metal layer has second reduction ability. The second metal layer is disposed on the first metal layer, and the first reduction ability is higher than the second reduction ability, such that the second metal layer is corroded and dissolved in the aluminum battery.

In an embodiment of the disclosure, a reaction potential of the first metal layer in a chloroaluminate ionic liquid is at least 0.5 volts higher than an oxidation potential of the second metal layer.

In an embodiment of the disclosure, an oxidation potential range of the first metal layer in a chloroaluminate ionic liquid is between 0.5 volts and 1 volt.

In an embodiment of the disclosure, an oxidation potential range of the second metal layer in a chloroaluminate ionic liquid is between -0.1 volts and 0.1 volts.

In an embodiment of the disclosure, the first metal layer includes zinc, copper, nickel, or titanium.

In an embodiment of the disclosure, the second metal layer includes aluminum.

In an embodiment of the disclosure, a thickness range of the first metal layer is between 10 micrometers (µm) and 100 µm.

In an embodiment of the disclosure, a thickness range of the second metal layer is between 0.5 µm and 50 µm.

In an embodiment of the disclosure, the first metal layer is in direct contact with the second metal layer.

In an embodiment of the disclosure, electron migration occurs on a contact surface between the first metal layer and the second metal layer.

Based on the above, the negative electrode structure applied to the aluminum battery of the disclosure has a design of the two metal layers stacked on each other. In this way, a galvanic corrosion mechanism may be used to effectively increase the rate of the metal dissolution reaction, thereby increasing the energy density of the aluminum battery.

In order for the features and advantages of the disclosure to be more comprehensible, the following specific embodiments are described in detail in conjunction with the drawings.

### BRIEF DESCRIPTION OF THE DRAWINGS

FIG. 1 is a partial schematic view of a negative electrode structure applied to an aluminum battery according to an embodiment of the disclosure.
FIG. 2 is a partial schematic view of an electrochemical cell for measuring metal reaction potentials.
FIG. 3 is a schematic view of comparing peak current results of aluminum dissolution in chloroaluminate ionic liquid of examples and a comparative example.
FIG. 4 is a schematic view of peak current results of aluminum dissolution in chloroaluminate ionic liquid of a nickel foil and a titanium foil.

### DESCRIPTION OF THE EMBODIMENTS

In order for the content of the disclosure to be easier to understand, the following specific embodiments are given as examples in which the disclosure can actually be implemented. For the sake of clarity, many practical details are described in the following description. However, it should be understood that the practical details should not be used to limit the disclosure. In other words, in some implementations of the disclosure, the practical details are unnecessary.

The disclosure will be described more fully with reference to the drawings of the embodiment. However, the disclosure may also be embodied in various forms and should not be limited to the embodiments described herein. Thicknesses, sizes, or magnitudes of layers or regions in the drawings may be exaggerated for clarity. The same or similar reference numerals represent the same or similar elements, which will not be repeated one by one in the following paragraphs.

Unless otherwise defined, all terms (including technical and scientific terms) used herein have the same meaning as commonly understood by persons of ordinary skill in the art to which the disclosure belongs.

Unless otherwise stated, the term "between" used in the specification to define a value range is intended to cover a range equal to and between the stated endpoint values. For example, a size range between a first value and a second value means that the size range may cover the first value, the second value, and any value between the first value and the second value.

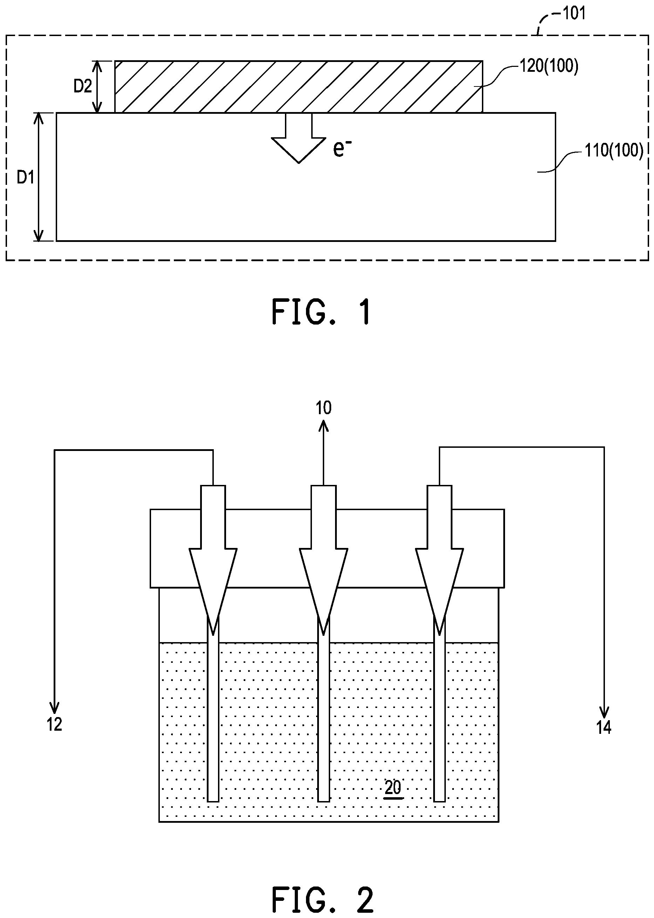

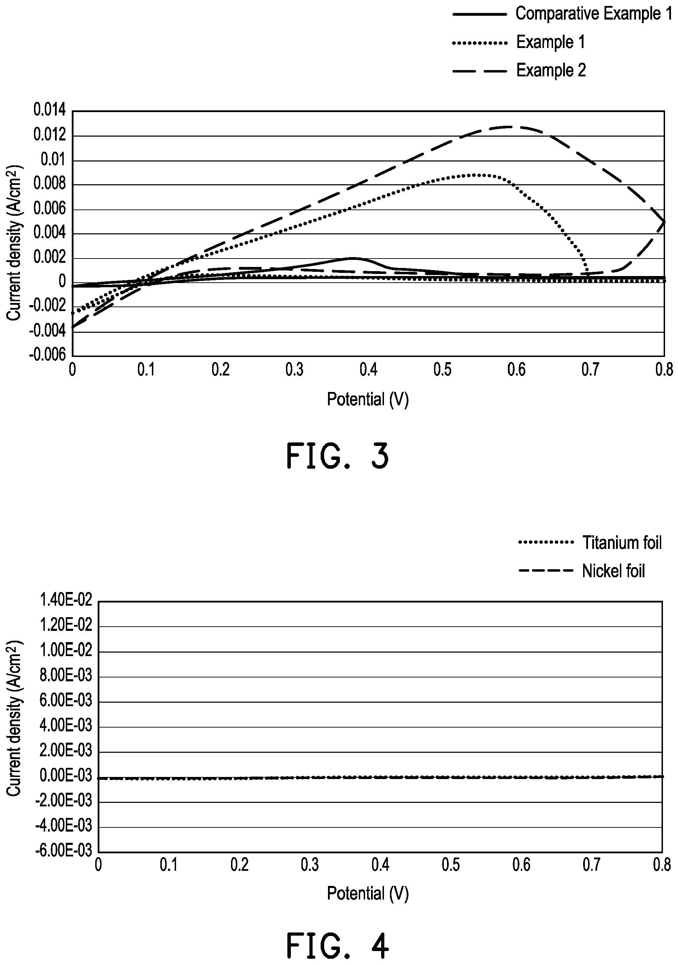

FIG. 1 is a partial schematic view of a negative electrode structure applied to an aluminum battery according to an embodiment of the disclosure. FIG. 2 is a partial schematic view of an electrochemical cell for measuring metal reaction potentials. FIG. 3 is a schematic view of comparing peak current results of aluminum dissolution in chloroaluminate ionic liquid of examples and a comparative example. FIG. 4 is a schematic view of peak current results of aluminum dissolution in chloroaluminate ionic liquid of a nickel foil and a titanium foil.

Please refer to FIG. 1. In the embodiment, a negative electrode structure 100 applied to an aluminum battery 101 includes a first metal layer 110 and a second metal layer 120, wherein the second metal layer 120 is disposed on the first metal layer 110. In addition, the first metal layer 110 has a first reduction ability, and the second metal layer 120 has a second reduction ability, and the first reduction ability is higher than the second reduction ability, such that the second metal layer 120 is corroded and dissolved in the aluminum battery 101. Accordingly, the negative electrode structure 100 applied to the aluminum battery 101 of the embodiment has the design of the two metal layers stacked on each other. In this way, a galvanic corrosion mechanism may be used to effectively increase the rate of a metal dissolution reaction, thereby improving the energy density of the aluminum battery. Here, the reduction ability refers to the ability to obtain electrons. Therefore, metal with a lower reduction ability may easily lose electrons to be oxidized. In this way, electron migration may naturally occur on a contact surface between the first metal layer 110 and the second metal layer 120 (as shown in FIG. 1, the second metal layer 120 loses electrons (e⁻), and the electrons migrate from the second metal layer 120 to the first metal layer 110, so that the second metal layer 120 is corroded and dissolved to release metal ions), wherein the first metal layer 110 is in direct contact with the second metal layer 120.

Further, in the embodiment, through the selection of materials, metal to be dissolved is used as an anode (that is, the second metal layer 120), and metal with a higher reduction ability is selected as a cathode (that is, the first metal layer 110), so that the second metal layer 120 is corroded and dissolved through the galvanic corrosion mechanism (different reduction reactivities of the two metals form a potential difference, the anode metal is corroded, and the cathode metal is less likely to be corroded in comparison), thereby effectively increasing the rate of the metal dissolution reaction of the negative electrode structure 100. Since negative electrodes of other batteries (for example, lithium batteries) do not undergo electrochemical reactions, there is no requirement for metal dissolution, instead, electrodes need to be protected from corrosion. Therefore, even if the negative electrodes of other batteries (for example, lithium batteries) have the stack structure of two metal layers, the reliability is still reduced due to the galvanic corrosion mechanism. However, the embodiment can increase the energy density of the aluminum battery 101 through the above setting and mechanism, thereby enhancing the performance of the aluminum battery 101.

It should be noted that the aluminum battery 101 of FIG. 1 only schematically shows the negative electrode structure 100 for clarity and does not represent the actual configuration inside the aluminum battery 101, and there is also the presence of an electrolyte (for example, the chloroaluminate ionic liquid, which may be 1-ethyl-3-methylimidazole chloride (EMIC) or 1-butyl-3-methylimidazole chloride (BMIC)) inside the aluminum battery 101.

In some embodiments, the oxidation potential of the first metal layer 110 in the chloroaluminate ionic liquid is at least 0.5 volts higher than the reaction potential of the second metal layer 120, wherein the oxidation potential range of the first metal layer 110 in the chloroaluminate ionic liquid may be between 0.5 volts and 1 volt, and the reaction potential range of the second metal layer 120 in the chloroaluminate ionic liquid may be between -0.1 volts and 0.1 volts.

For example, the first metal layer 110 includes zinc, copper, nickel, or titanium, and the second metal layer 120 includes aluminum. The reduction ability may be measured through the reaction potential and is obtained through measuring the oxidation potential as in the disclosure. The higher the oxidation potential of the metal layer, the less likely the metal itself is to be oxidized, and the easier to be reduced (high reduction ability). As shown in Table 1, when the oxidation potential of the titanium foil is higher than the oxidation potential of an aluminum foil by about 0.8 volts (V), it means that the titanium foil is easier to restore than the aluminum foil. The galvanic corrosion mechanism is formed in the stack, such that the aluminum foil is oxidized to release electrons, so as to dissolve the aluminum foil. Therefore, through the difference in the oxidation potentials of different metal foils in the chloroaluminate ionic liquid, metal with a high reduction ability is selected as a current collector. Metal to be dissolved (for example, aluminum) is deposited on the current collector metal foil (for example, zinc, copper, nickel, or titanium) with high oxidation potential by electroplating. The aluminum dissolution rate and the aluminum dissolution amount of the negative electrode structure 100 are increased by the galvanic corrosion reaction, thereby enhancing an aluminum dissolution reaction of the negative electrode structure 100, but the disclosure is not limited thereto. Table 1 presents the oxidation potentials of metal foils such as the aluminum foil, a zinc foil, a copper foil, the nickel foil, and the titanium foil measured by the Tafel extrapolation. The reaction potentials may be obtained through the electrochemical cell (including a reference electrode 10, an auxiliary electrode 12, a working electrode 14 (metal to be tested), and an electrolyte 20 (AlCₗ³-EMIC)) of FIG. 2.

**Table 1**

| Metal foil | Oxidation potential (V vs. Al/Al3⁺) |
|---|---|
| Al | -0.03V |
| Zn | +0.21V |
| Cu | +0.63 V |
| Ni | +0.78V |
| Ti | +0.82V |

Furthermore, the chloroaluminate ionic liquid (AlCl₃⁻EMIC) with a surface with a current density of 50 mA/cm² was used to coat an aluminum layer with a thickness of 1.5 µm on the metal with a high reduction ability (nickel, titanium) and a thickness of 50 µm. Cyclic voltammetry was performed in a three-pole electrochemical cell to measure at a scan rate of 10 mV/s. The differences between a nickel foil plated aluminum negative electrode with a total thickness of 51.5 µm (Example 1), a titanium foil plated aluminum negative electrode with a total thickness of 51.5 µm (Example 2), and an aluminum foil with a total thickness of 50 µm (Comparative Example 1) in the electrolyte at the same scan rate were compared, and the detailed results are as shown in FIG. 3. In addition, the nickel foil and the titanium foil were also measured according to the above analysis method. It was found that in the same electrochemical window, no current of the aluminum dissolution reaction was generated (located at the position of current density 0), as shown in FIG. 4. Here, the potentials of the X-axis of FIG. 3 and FIG. 4 were obtained by comparing with Al/Al³⁺.

From the results of FIG. 3 and FIG. 4, the following conclusions may be drawn. The peak currents of aluminum dissolution of Example 1 and Example 2 are increased by more than 300% compared with Comparative Example 1, that is, the nickel foil plated aluminum negative electrode and the titanium foil plated aluminum negative electrode can effectively increase the amount of the aluminum dissolution reaction, and can also increase the aluminum dissolution rate at the same scan rate. In this case, when the negative electrode is placed in the aluminum battery, the energy density can be effectively increased. Comparing FIG. 3 and FIG. 4, the nickel foil plated aluminum negative electrode and the titanium foil plated aluminum negative electrode having higher amount and rate of the aluminum dissolution reaction is indeed due to the galvanic corrosion mechanism, thereby improving the aluminum dissolution reactivity.

In addition, a metal aluminum foil is often used as a negative electrode of an aluminum battery at present, and the metal aluminum foil may easily oxidize to produce dense alumina on the surface. In this way, AlCl₄⁻, which is originally expected to undergo the aluminum dissolution reaction during a discharge process, selectively corrodes an oxide layer, causing the rate of the aluminum dissolution reaction to be low and the aluminum dissolution amount to be small, such that the energy density of the aluminum battery cannot be effectively increased. Therefore, the design of the two metal layers stacked on each other of the embodiment can increase the aluminum dissolution amount before the formation of the oxide layer, thereby effectively increasing the energy density of the aluminum battery, but the disclosure is not limited thereto.

In some embodiments, the chloroaluminate ionic liquid may be used to electroplate metal with a low reduction ability (for example, aluminum) on the surface of the metal with a high reduction ability (for example, zinc, copper, nickel, or titanium). In this way, the coating can be uniformly controlled, and the process is simple and easy for large-scale production, but the disclosure is not limited thereto. Here, there may be an appropriate corresponding electroplating mechanism corresponding to the selected ionic liquid, which will not be repeated here.

In some embodiments, a thickness D1 range of the first metal layer 110 is between 10 µm and 100 µm, and a thickness D2 range of the second metal layer 120 is between 0.5 µm and 50 µm, but the disclosure is not limited thereto. The thickness D1 of the first metal layer 110 and the thickness D2 of the second metal layer 120 may be determined according to actual design requirements.

In the above content, other unspecified compositions (for example, a positive electrode and/or a separator) and configurations of the aluminum battery should be obtainable by persons of ordinary skill in the art of the disclosure according to any content covering the spirit and the scope included in the appended claims, which will not be repeated here.

In summary, the negative electrode structure applied to the aluminum battery of the disclosure has the design of the two metal layers stacked on each other. In this way, the galvanic corrosion mechanism may be used to effectively increase the rate of the metal dissolution reaction, thereby increasing the energy density of the aluminum battery.

Although the disclosure has been disclosed in the above embodiments, the embodiments are not intended to limit the disclosure. Persons skilled in the art may make some changes and modifications without departing from the spirit and scope of the disclosure. Therefore, the protection scope of the disclosure shall be defined by the appended claims.

## Claims

1. A negative electrode structure (100) applied to an aluminum battery (101), comprising:
a first metal layer (110), having a first reduction ability; and
a second metal layer (120), having a second reduction ability, wherein the second metal layer (120) is disposed on the first metal layer (110), and the first reduction ability is higher than the second reduction ability, such that the second metal layer (120) is corroded and dissolved in the aluminum battery (101).

2. The negative electrode structure (100) according to claim 1, wherein a reaction potential of the first metal layer (110) in a chloroaluminate ionic liquid is at least 0.5 volts higher than an oxidation potential of the second metal layer (120).

3. The negative electrode structure (100) according to claim 1, wherein an oxidation potential range of the first metal layer (110) in a chloroaluminate ionic liquid is between 0.5 volts and 1 volt.

4. The negative electrode structure (100) according to claim 1, wherein an oxidation potential range of the second metal layer (120) in a chloroaluminate ionic liquid is between -0.1 volts and 0.1 volts.

5. The negative electrode structure (100) according to claim 1, wherein the first metal layer (110) comprises zinc, copper, nickel, or titanium.

6. The negative electrode structure (100) according to claim 1, wherein the second metal layer (120) comprises aluminum.

7. The negative electrode structure (100) according to claim 1, wherein a thickness range of the first metal layer (110) is between 10 µm and 100 µm.

8. The negative electrode structure (100) according to claim 1, wherein a thickness range of the second metal layer (120) is between 0.5 µm and 50 µm.

9. The negative electrode structure (100) according to claim 1, wherein the first metal layer (110) is in direct contact with the second metal layer (120).

10. The negative electrode structure (100) according to claim 1, wherein electron migration occurs on a contact surface between the first metal layer (110) and the second metal layer (120).
